# EUROPEAN PATENT APPLICATION

(11) **EP 4 258 560 A1**
(43) Date of publication of application: **11.10.2023**
(21) Application number: 23166230.5
(22) Date of filing: 31.03.2023
(51) Int. Cl.: H04B 1/10, H04B 17/336, H04B 17/345, H04W 84/18

(54) **ADAPTIVE WIRELESS PACKET FILTERING CONTROL**

(30) Priority: 08.04.2022 US 202217716930
(71) Applicant: Meta Platforms, Inc., Menlo Park, CA 94025 (US)
(72) Inventor: HUANG, Po Han, Menlo Park, 94025 (US); HELMY MOHAMED, Ahmed Gamal, Menlo Park, 94025 (US); GOMADAM, Krishna Srikanth, Menlo Park, 94025 (US); BONDALAPATI, Pratheep, Menlo Park, 94025 (US)
(74) Representative: Murgitroyd & Company

(57) **Abstract**

The disclosed computer-implemented method may include receiving, by a receiver node of a wireless network, a packet sent by a transmitter node of the wireless network and identifying a packet type of the received packet. The method may also include determining, based on at least the identified packet type, a signal strength threshold and comparing a signal strength of the received packet with the signal strength threshold. The method may further include processing, by the receiver node, the received packet when the signal strength satisfies the signal strength threshold. Various other methods, systems, and computer-readable media are also disclosed.

## Description

### TECHNICAL FIELD

The present disclosure is generally directed to methods and systems for adaptive wireless packet filtering control.

### BACKGROUND

Wireless networks provide flexibility by allowing data transmissions between nodes of the wireless network without requiring physical connections therebetween. Certain types of wireless networks, such as wireless mesh networks in which any node may generally communicate with any other node, may allow further flexibility by foregoing a hierarchical structure amongst nodes. Such flexibility may allow wireless mesh networks to dynamically adapt to changes to network topology, such as by rerouting around failed nodes.

However, interference may be an issue in wireless mesh networks. Because a transmitter node wirelessly broadcasts data to the intended destination receiver node, other nodes within signal range of the transmitter node may also undesirably receive the data transmission. Until a node processes a received transmission, the node may not recognize whether it was the intended recipient for a transmission. In addition, as the node processes a received transmission, the node may not be able to receive other transmissions. Thus, a node may miss receiving an intended transmission while processing an unintended transmission, creating a blocking effect that may adversely affect network performance.

Some solutions to mitigating interference include removing the sources of interference. For example, interference source nodes or links (e.g., a communication link between two nodes) may be set to different channels, codes, time slots, etc. or transmissions from the interference source nodes or links may be nulled on certain angles. However, these network-level solutions may exhibit certain fundamental problems and restrictions. For instance, such solutions require comprehensive topology information (e.g., angles of arrival and departure between each node pair), detailed antenna patterns of each node, and active traffic patterns in a network, which may be difficult to obtain efficiently and accurately. In some scenarios, such as a dense network, the amount of resources including channels, codes, and time slots may not be enough to sufficiently separate aggressor links and victim links. In addition, such solutions may not be agile enough to address topology changes, the dynamic nature of wireless channels, etc. Moreover, such solutions may not adequately address the importance and distinction between various packet types. For example, data packets may be more vulnerable to the interference than control packets.

### SUMMARY OF THE INVENTION

In a first aspect of the present invention, there is provided a computer-implemented method comprising: receiving, by a receiver node of a wireless network, a packet sent by a transmitter node of the wireless network, resulting in a received packet; identifying a packet type of the received packet; determining, based on at least the identified packet type, a signal strength threshold; comparing a signal strength of the received packet with the signal strength threshold; and processing, by the receiver node, the received packet when the signal strength satisfies the signal strength threshold.

The signal strength threshold may comprise a filter value range including an upper threshold and a lower threshold.

The signal strength threshold may be determined based on a distance between the receiver node and the transmitter node.

The distance may be determined by mapping a topology of the wireless network using statistical analysis.

The signal strength threshold may be based on an interference management scan of the wireless network that measures an interference between each link for every pair of transmitter and receiver nodes in the wireless network.

The method may further comprise adjusting the signal strength threshold for each link based on the interference management scan.

The method may further comprise increasing the signal strength threshold for a link when an interference measurement for the link is greater than an interference threshold.

The method may further comprise decreasing the signal strength threshold for a link when an interference measurement for the link is less than an interference threshold.

The method may further comprise adjusting the signal strength threshold based on a live link performance for a link between the transmitter node and the receiver node.

The method may further comprise decreasing the signal strength threshold when a false negative count of the link is greater than a false negative threshold.

The method may further comprise increasing the signal strength threshold when a false positive count of the link is greater than a false positive threshold.

The processing of the received packet may include placing the received packet in a queue for processing packets.

The processing of the received packet may include reading a destination of the packet.

The method may further comprise dropping the received packet when the signal strength does not satisfy the signal strength threshold.

The packet type may include a control packet or a data packet.

In a second aspect of the present invention, there is provide a system comprising: an antenna for communicating with a wireless network; at least one physical processor; and a physical memory comprising computer-executable instructions that, when executed by the physical processor, cause the physical processor to: receive, via the antenna, a packet sent by a transmitter node of the wireless network, resulting in a received packet; identify a packet type of the received packet; determine, based on at least the identified packet type, a signal strength threshold; compare a signal strength of the received packet with the signal strength threshold; and process the received packet when the signal strength satisfies the signal strength threshold.

The signal strength threshold may be determined based on a distance between the transmitter node, and the distance may be determined by mapping a topology of the wireless network using statistical analysis.

The system may further comprise adjusting the signal strength threshold for each link based on an interference management scan of the wireless network that measures an interference between each link for every pair of transmitter and receiver nodes in the wireless network by: increasing the signal strength threshold for a link when an interference measurement for the link is greater than an interference threshold; and decreasing the signal strength threshold for a link when an interference measurement for the link is less than the interference threshold.

The system may further comprise adjusting the signal strength threshold based on a live link performance for a link with the transmitter node by: decreasing the signal strength threshold when a false negative count of the link is greater than a false negative threshold; and increasing the signal strength threshold when a false positive count of the link is greater than a false positive threshold.

In a third aspect of the present invention, there is provided a program as specified in claim 15. Such a program can be provided by itself or carried by a carrier medium. The carrier medium may be a recording or other storage medium. The transmission medium may be a signal.

In a further aspect of the present invention, there is provided a computer-readable medium comprising one or more computer-executable instructions that, when executed by at least one processor of a computing device, cause the computing device to: receive, via an antenna, a packet sent by a transmitter node of a wireless network, resulting in a received packet; identify a packet type of the received packet; determine, based on at least the identified packet type, a signal strength threshold; compare a signal strength of the received packet with the signal strength threshold; and process the received packet when the signal strength satisfies the signal strength threshold.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a flow diagram of an exemplary method for adaptive wireless packet filtering control.
FIG. 2 is a block diagram of an exemplary system for adaptive wireless packet filtering control.
FIG. 3 is a block diagram of an exemplary wireless network.
FIG. 4 is a block diagram of an exemplary filtering circuit for adaptive wireless packet filtering control.
FIG. 5 is a block diagram of an exemplary control loop for adaptive wireless packet filtering control.
FIG. 6A is a block diagram of a static control portion of the control loop.
FIG. 6B is a block diagram of exemplary distances used for the static control portion.
FIG. 7 is a block diagram of a quasi-static control portion of the control loop.
FIG. 8 is a block diagram of a dynamic control portion of the control loop.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Wireless networks provide flexibility by allowing data transmissions between nodes of the wireless network without requiring physical connections therebetween. Certain types of wireless networks, such as wireless mesh networks in which any node may generally communicate with any other node, may allow further flexibility by foregoing a hierarchical structure amongst nodes. Such flexibility may allow wireless mesh networks to dynamically adapt to changes to network topology, such as by rerouting around failed nodes.

However, interference may be an issue in wireless mesh networks. Because a transmitter node wirelessly broadcasts data to the intended destination receiver node, other nodes within signal range of the transmitter node may also undesirably receive the data transmission. Until a node processes a received transmission, the node may not recognize whether it was the intended recipient for a transmission. In addition, as the node processes a received transmission, the node may not be able to receive other transmissions. Thus, a node may miss receiving an intended transmission while processing an unintended transmission, creating a blocking effect that may adversely affect network performance.

Some solutions to mitigating interference include removing the sources of interference. For example, interference source nodes or links (e.g., a communication link between two nodes) may be set to different channels, codes, time slots, etc. or transmissions from the interference source nodes or links may be nulled on certain angles. However, these network-level solutions may exhibit certain fundamental problems and restrictions. For instance, such solutions require comprehensive topology information (e.g., angles of arrival and departure between each node pair), detailed antenna patterns of each node, and active traffic patterns in a network, which may be difficult to obtain efficiently and accurately. In some scenarios, such as a dense network, the amount of resources including channels, codes, and time slots may not be enough to sufficiently separate aggressor links and victim links. In addition, such solutions may not be agile enough to address topology changes, the dynamic nature of wireless channels, etc. Moreover, such solutions may not adequately address the importance and distinction between various packet types. For example, data packets may be more vulnerable to the interference than control packets.

The present disclosure is generally directed to adaptive wireless packet filtering. As will be explained in greater detail below, embodiments of the present disclosure may identify a packet type of a received packet, determine a signal strength threshold based on the packet type, compare a signal strength of the received packet with the signal strength threshold, and process the received packet when its signal strength satisfies the signal strength threshold. By determining whether to drop or keep a received packet before fully processing the packet, the systems and methods described herein may advantageously reduce or mitigate a blocking effect caused by interference. The systems and methods described herein may improve the functioning of a computing device by more quickly and efficiently determining whether to drop a packet without utilizing the computing resources and time needed to fully process the packet. In addition, the systems and methods herein may improve the technical field of wireless networks by providing a solution to interference exhibited in wireless networks.

Features from any of the embodiments described herein may be used in combination with one another in accordance with the general principles described herein. These and other embodiments, features, and advantages will be more fully understood upon reading the following detailed description in conjunction with the accompanying drawings and claims.

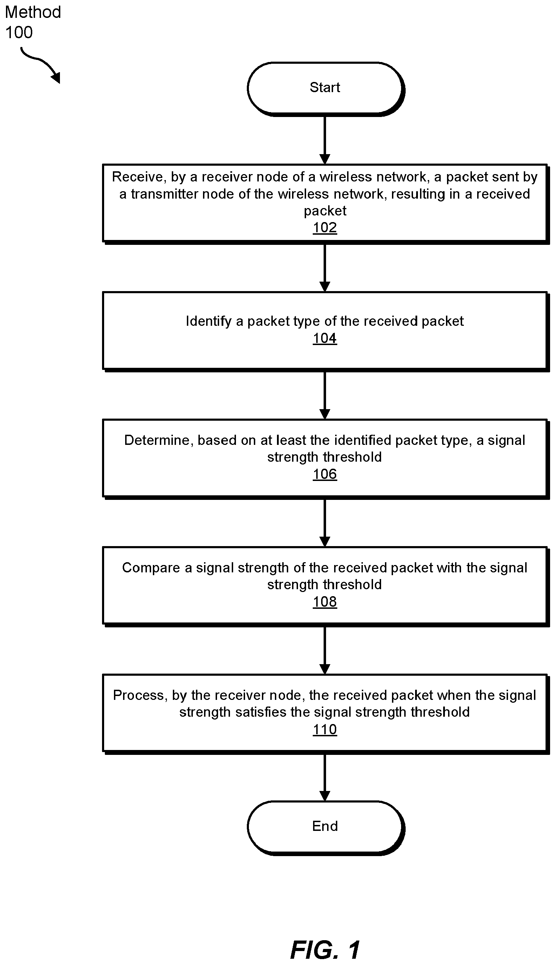

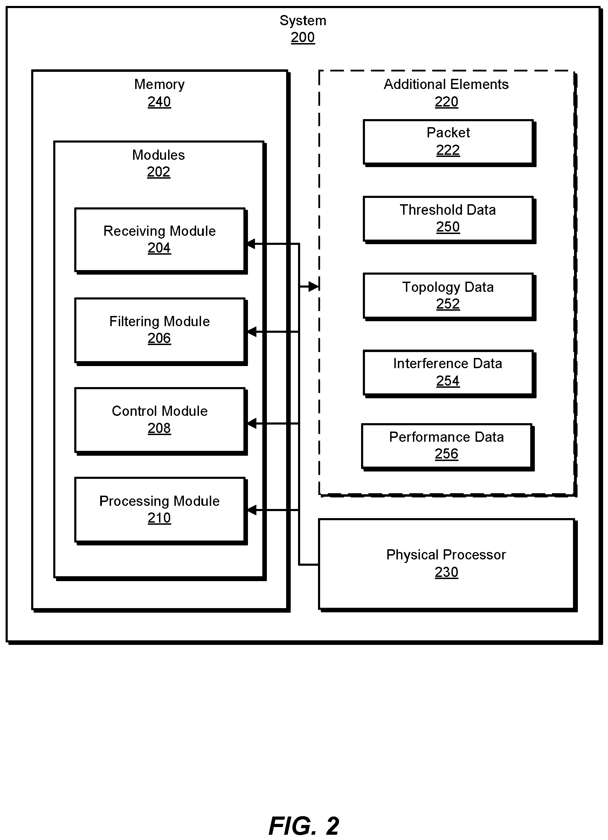

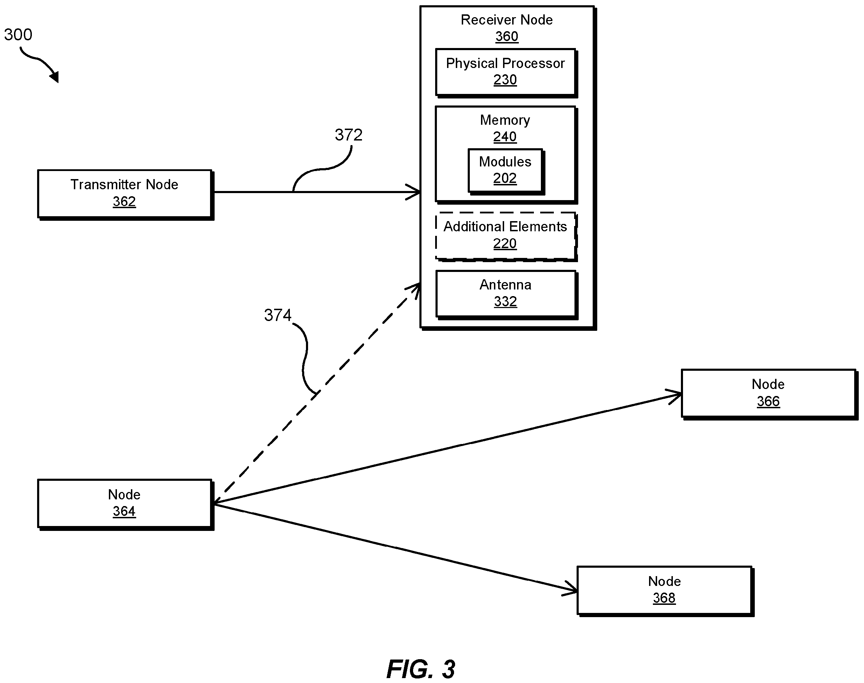

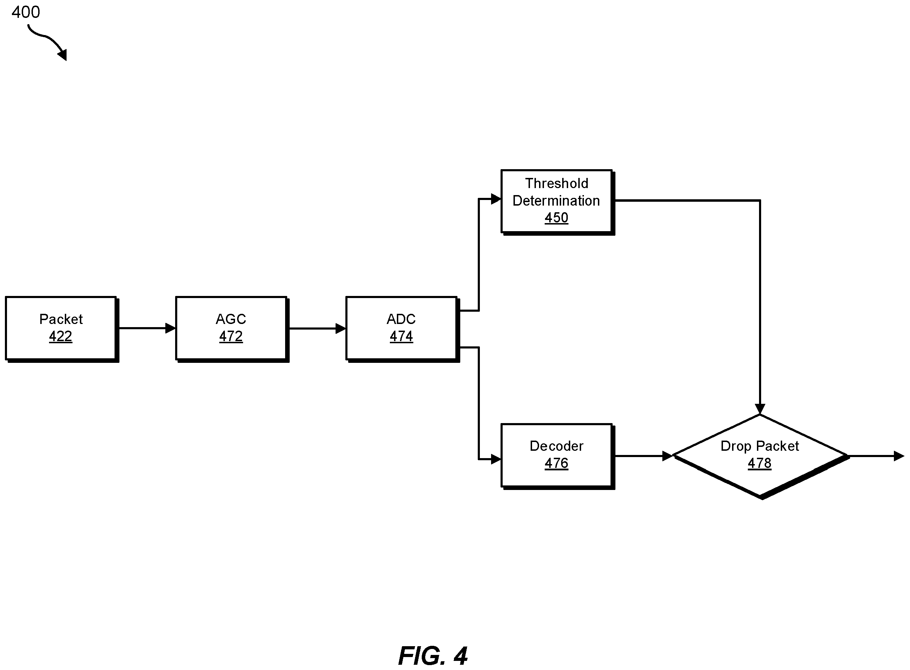

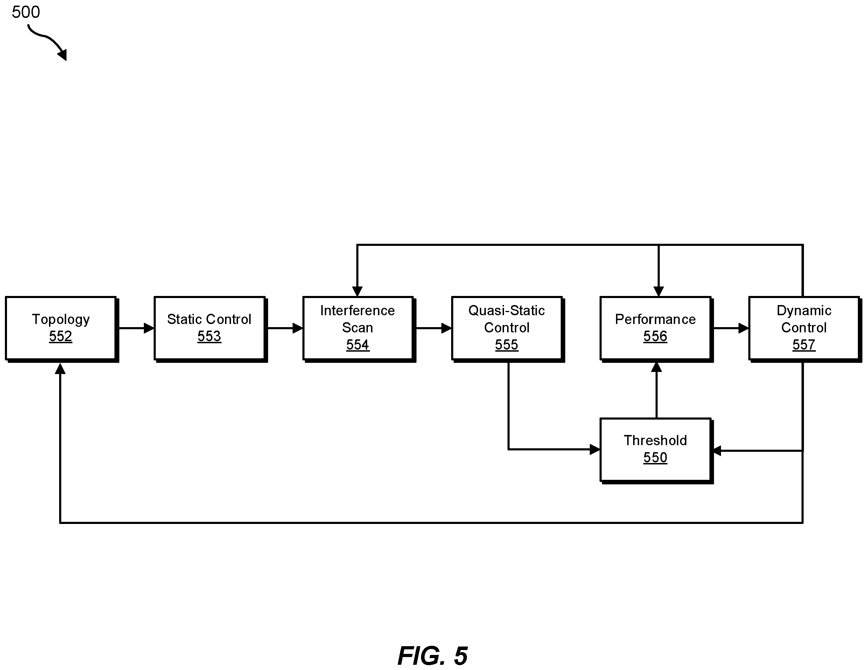

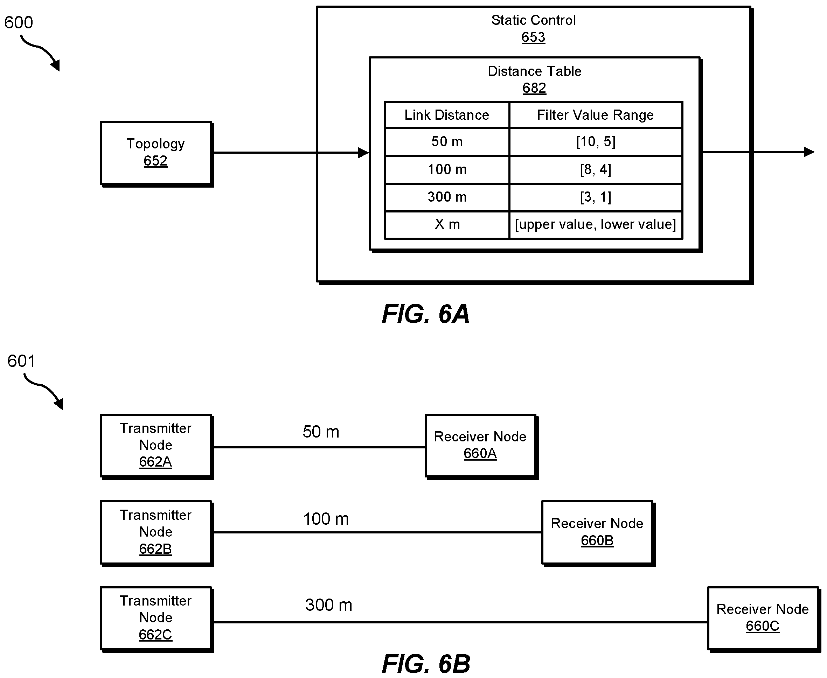

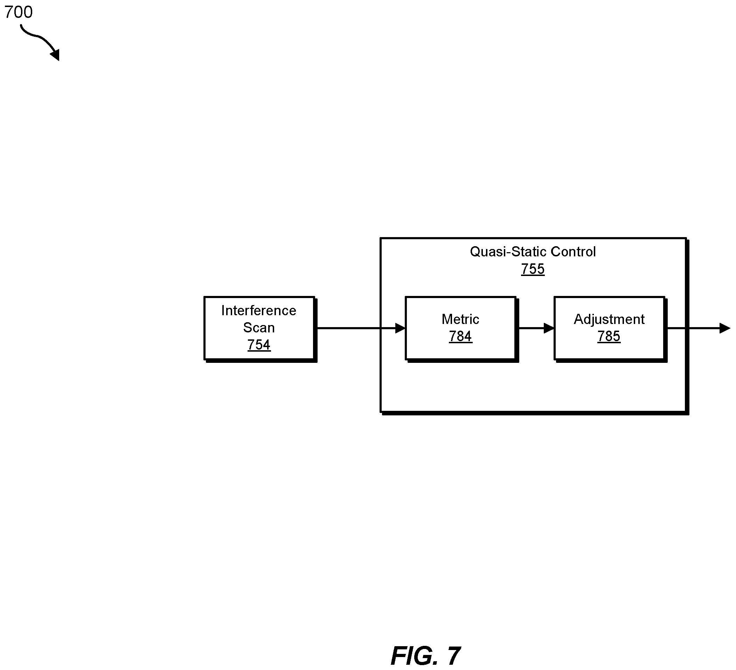

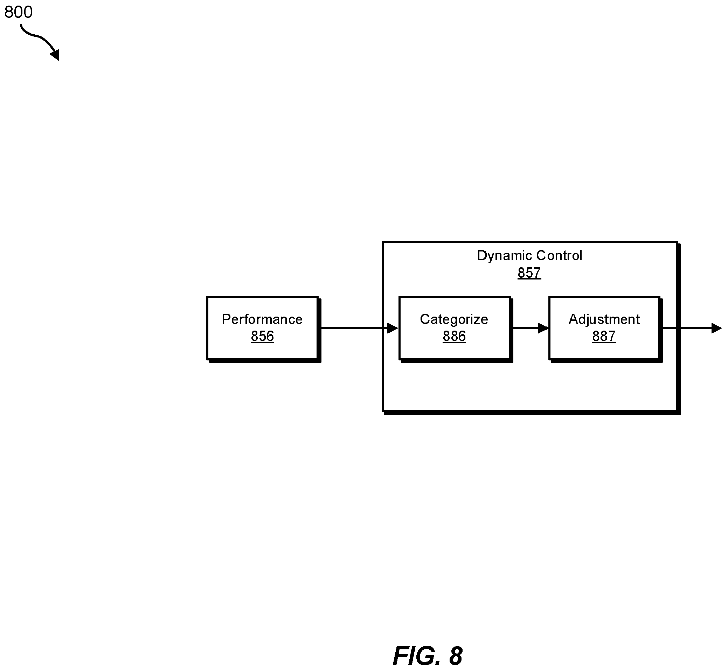

The following will provide, with reference to FIGS. 1-8, detailed descriptions of adaptive wireless packet filtering control. Detailed descriptions of an exemplary method are provided in connection with FIG. 1. Detailed descriptions of exemplary nodes in a wireless mesh network are provided with FIGS. 2 and 3. Detailed descriptions of an example filtering circuit are provided with FIG. 4. Detailed descriptions of a control loop for managing threshold are provided with FIG. 5, along with descriptions of distance-based control (with FIG. 6), interference scan-based control (with FIG. 7), and performance-based control (with FIG. 8).

FIG. 1 is a flow diagram of an exemplary computer-implemented method 100 for adaptive wireless packet filtering control. The steps shown in FIG. 1 may be performed by any suitable computer-executable code and/or computing system, including the system(s) illustrated in FIGS. 2 and/or 3. In one example, each of the steps shown in FIG. 1 may represent an algorithm whose structure includes and/or is represented by multiple sub-steps, examples of which will be provided in greater detail below.

As illustrated in FIG. 1, at step 102 one or more of the systems described herein may receive, by a receiver node of a wireless network, a packet sent by a transmitter node of the wireless network. For example, a receiving module 204, as part of system 200 in FIG. 2, may receive a packet 222 that may be sent by a transmitter node.

In some embodiments, the term "node" may refer to a device in a network that may be capable of transmitting, receiving, and/or creating data. Examples of nodes include, without limitation, a wireless access point, a computing device (e.g., a laptop computer, desktop computer, mobile device), routers, gateways, etc. In addition, in some embodiments, the term "receiver node" may refer to a node receiving data in a link between nodes and the term "transmitter node" may refer to a node transmitting data in the link between nodes. Although the present disclosure describes receiver and transmitter nodes herein to clarify the nodes' relationship in a corresponding link, in other examples the nodes described herein may be a receiver node and/or a transmitter node.

In some embodiments, the term "packet" may refer to a formatted unit of data that may be transmitted in a network. For example, data may be transmitted through the network divided into a series of packets. In addition to the data (e.g., payload), a packet may include additional control information for delivering the payload. Moreover, different types of packets may include control packets that may be used for administrating a network (e.g., the payload may include data for managing the network), and data packets that may be used for transmitting data (e.g., the payload may include data carried on behalf of an application).

Various systems described herein may perform step 102. FIG. 2 is a block diagram of an example system 200 for adaptive wireless packet filtering control. As illustrated in this figure, example system 200 may include one or more modules 202 for performing one or more tasks. As will be explained in greater detail herein, modules 202 may include a receiving module 204, a filtering module 206, a control module 208, and a processing module 210. Although illustrated as separate elements, one or more of modules 202 in FIG. 2 may represent portions of a single module or application.

In certain embodiments, one or more of modules 202 in FIG. 2 may represent one or more software applications or programs that, when executed by a computing device, may cause the computing device to perform one or more tasks. For example, and as will be described in greater detail below, one or more of modules 202 may represent modules stored and configured to run on one or more computing devices, such as the devices illustrated in FIG. 3 (e.g., any of a receiver node 360, a transmitter node 362, a node 364, a node 366, and/or a node 368). One or more of modules 202 in FIG. 2 may also represent all or portions of one or more special-purpose computers configured to perform one or more tasks.

As illustrated in FIG. 2, example system 200 may also include one or more memory devices, such as memory 240. Memory 240 generally represents any type or form of volatile or non-volatile storage device or medium capable of storing data and/or computer-readable instructions. In one example, memory 240 may store, load, and/or maintain one or more of modules 202. Examples of memory 240 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, and/or any other suitable storage memory.

As illustrated in FIG. 2, example system 200 may also include one or more physical processors, such as physical processor 230. Physical processor 230 generally represents any type or form of hardware-implemented processing unit capable of interpreting and/or executing computer-readable instructions. In one example, physical processor 230 may access and/or modify one or more of modules 202 stored in memory 240. Additionally or alternatively, physical processor 230 may execute one or more of modules 202 to facilitate maintain the mapping system. Examples of physical processor 230 include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, and/or any other suitable physical processor.

As illustrated in FIG. 2, example system 200 may also include one or more additional elements 220, such as packet 222, threshold data 250, topology data 252, interference data 254, and performance data 256. Packet 222, threshold data 250, topology data 252, interference data 254, and/or performance data 256 may be stored on a local storage device, such as memory 240, or may be accessed remotely. Packet 222 may represent a received packet that may potentially be processed, as will be explained further below. Threshold data 250 may represent data including signal strength threshold information that may be used for determining whether to drop or process a received packet. Topology data 252 may represent data relating to topology information of a corresponding wireless network. Interference data 254 may represent data regarding interference between nodes in the wireless network, as will be explained further below. Performance data 256 may represent data including performance metrics of a node in the wireless network, as will be explained further below.

Example system 200 in FIG. 2 may be implemented in a variety of ways. For example, all or a portion of example system 200 may represent portions of example network environment 300 in FIG. 3.

FIG. 3 illustrates an exemplary network environment 300 implementing aspects of the present disclosure. Network environment 300 may correspond to a wireless network and in some examples, more specifically a mesh network. In some embodiments, the term "mesh network" may refer to a network topology in which nodes may connect non-hierarchically and directly to as many other nodes as possible. The nodes may dynamically connect and self-configure to allow self-forming (e.g., dynamic reorganization or redistributing workloads) and self-healing (e.g., to address a failed node). Although the present disclosure describes wireless mesh networks, in other embodiments the systems and methods described herein may be applied to other types of wired and/or wireless networks.

The network environment 300 includes receiver node 360, transmitter node 362, node 364, node 366, and node 368, each of which may correspond to a radio node or a computing device such as a client device or user device (e.g., a desktop computer, laptop computer, tablet device, smartphone, or other computing device) and may further correspond to system 200. Receiver node 360 may include a physical processor 230, which may be one or more processors, memory 240, which may store data such as one or more of additional elements 220, and an antenna 332, which may be an antenna or other wireless transmission device capable of receiving and/or sending wireless signals. Although not illustrated in FIG. 3, each of transmitter node 362, node 364, node 366, and/or node 368 may also include similar components as receiver node 360.

Each of receiver node 360, transmitter node 362, node 364, node 366, and node 368 may be capable of wirelessly connecting to any other node to establish links, such as an active link 372 and/or an interfering link 374, for sending packets as will be described further below. Network 304 may represent any type or form of communication network, such as the Internet, and may correspond to one or more wireless connections, such as WAN.

Returning to method 100, the systems described herein may perform step 102 in a variety of ways. In one example, receiver node 360 may receive a packet (e.g., packet 222) from transmitter node 362 over active link 372. In some embodiments, the term "active link" may refer to a wireless communication link between a source node and an intended destination node. Thus, transmitter node 362 may send packet 222 intended for receiver node 360 via active link 372.

However, in a wireless network and in particular a wireless mesh network, a node may receive a packet intended for a different node. For example, node 364 may broadcast a packet intended for node 366 that may also be received by receiver node 360, establishing interfering link 374. In some embodiments, the term "interfering link" may refer to a wireless communication link between a source node and an unintended destination node. For instance, in wireless mesh networks, because a node may communicate with other nodes without a hierarchy (e.g., without being limited to specific links between particular nodes), and due to the broadcasting nature of wireless transmissions, a given node may receive packets not intended for that given node. Receiving unintended packets may interfere with a node's ability to receive intended packets on active links.

Until receiver node 360 processes the received packet 222 (e.g., by parsing a header of packet 222 to identify its destination node), receiver node 360 may not normally be able to identify whether it was the intended destination for packet 222. Processing packet 222 may delay receiver node 360 from receiving and/or processing packets intended for receiver node 360, causing a blocking effect. As will be described further below, the systems and methods herein may allow receiver node 360 to more efficiently and quickly determine whether to drop packet 222 before processing packet 222 in order to mitigate the blocking effect.

Turning back to FIG. 1, at step 104 one or more of the systems described herein may identify a packet type of the received packet. For example, filtering module 206 may identify a packet type of packet 222.

The systems described herein may perform step 104 in a variety of ways. In one example, filtering module 206 may read the packet type from packet 222 (e.g., from a header of packet 222) without fully processing packet 222. In some examples, the packet type may include a control packet or a data packet. As described above, a control packet may be used for managing the network and may generally be smaller than a data packet. As such, a blocking effect caused by a control packet may be less than a blocking effect caused by a data packet. In other examples, filtering module 206 may identify other types of packets and/or other packet attributes.

FIG. 4 illustrates a block diagram of a circuit for processing packets. A receiver node (e.g., receiver node 360) may receive a packet 422 (which may correspond to packet 222) as a wireless signal. The wireless signal may be adjusted to a suitable signal amplitude (via an automatic gain control circuit (AGC) 472) and converted from an analog signal to a digital signal (via an analog-to-digital converter circuit (ADC) 474). Packet 422 may then be routed (in some examples asynchronously) through two different branches as illustrated in FIG. 4.

A bottom branch in FIG. 4 may correspond to normal packet processing. For example, packet 422 may be decoded (via a decoder 476) and parsed for further processing, which may include identifying, from the header of packet 422, a destination node of packet 422. After this initial processing, packet 422 may be dropped at decision 478 for various reasons, such as the destination node being a different node, packet 422 is expired or is a resending of a previously received packet, packet 422 is unreadable or contains errors, etc. Otherwise, packet 422 may be further processed (e.g., its payload may be processed).

As described herein, this processing branch may create a blocking effect that may be particularly unfavorable if packet 422 is ultimately to be dropped. The top branch may correspond to a faster or otherwise less computational resource blocking branch for determining whether to drop packet 422. At threshold determination 450, a packet type for packet 422 may be identified. For example, filtering module 206 may read the packet type from the header of packet 422, which may be a faster process than the decoding and processing by decoder 476. As will be explained further below, filtering module 206 may determine an appropriate threshold, based on the packet type, to be applied at decision 478.

Returning to FIG. 1, at step 106 one or more of the systems described herein may determine, based on at least the identified packet type, a signal strength threshold. For example, filtering module 206 may determine an appropriate signal strength threshold, which may be stored in threshold data 250, based on the packet type of packet 222.

The systems described herein may perform step 106 in a variety of ways. In one example, threshold data 250 may include signal strength threshold values for various packet types such that filtering module 206 may select a corresponding signal strength threshold for the packet type of packet 222. In some examples, the signal strength threshold may include a filter value range including an upper threshold and a lower threshold for signal strength such that a packet with a signal strength within the filter value range (e.g., satisfying the signal strength threshold) may be processed, and a packet with a signal strength outside of the filter value range may be dropped. Threshold data 250, including filter value ranges, may be initially set to a predetermined value (which may be based on statistical or other analysis) and dynamically updated by control module 208 as will be described below.

FIG. 5 illustrates a control loop 500 that may be performed by control module 208. Control module 208 may use various factors, such as a distance between the receiver node and the transmitter node, an interference between links, and/or a live link performance, to update signal strength threshold values in threshold 550 (which may correspond to threshold data 250). Control module 208 may use topology 552 (which may correspond to topology data 252) to perform static control 553.

FIGS. 6A and 6B illustrate how static control may utilize node distances for signal strength values. Because the network's topology may not be expected to change often (further relating to how often the topology may be mapped), the signal strength threshold management using the topology may be referred to as static control. In FIG. 6A, topology 652 (which may correspond to topology 552 in FIG. 5), may include information about a current network topology, such as nodes in the network and distances between each pair of nodes (e.g., link distances). Topology 652 may be determined using known values, such as distances based on establishing the network. Alternatively or in addition, topology 652 may be dynamically mapped, which may account for changes in topology such as moving nodes, adding new nodes, removing nodes (e.g., failed nodes), etc. The topology and/or filter value ranges may be mapped using statistical analysis, such as analysis of times to send/receive packets, signal strengths of received packets, etc.

FIG. 6B illustrates a topology 601 (which may correspond to topology 652) of a transmitter node 662A, a receiver node 660A, a transmitter node 662B, a receiver node 660B, a transmitter node 662C, and a receiver node 660C, each of which may correspond to any node described herein. As illustrated in FIG. 6B, a link distance between transmitter node 662A and receiver node 660A may be 50 m, a link distance between transmitter node 662B and receiver node 660B may be 100 m, and a link distance between transmitter node 662C and receiver node 660C may be 300 m. Although not illustrated in FIG. 6B, topology 601 may include additional and/or all permutations of pairs of nodes in the network.

At static control 653, after control module 208 determines the nodes and link distance for a current received packet, control module 208 may use a distance table 682 to look up an appropriate filter value range. As shown in distance table 682, longer distances may have lower filter value thresholds for both upper and lower value thresholds than those of shorter distances. At shorter distances, a stronger signal may be expected. In addition, at shorter distances, greater variance in signal strength (reflect by a longer range) may be acceptable.

Although not illustrated in FIG. 6A, the filter value ranges may differ based on packet type. For example, a control packet, being a smaller packet than a data packet, may have more restrictive filter value ranges (e.g., having higher upper and/or lower value threshold, and/or having a smaller range) than those of data packets. Thus, different packet types may have different distance tables.

Turning back to FIG. 5, in some examples control module 208 may further fine tune the filter value ranges (e.g., threshold 550) based on an interference scan 554 (for updating interference data 254) and a quasi-static control 555. FIG. 7 illustrates an interference control 700 including an interference scan 754 (corresponding to interference scan 554) and a quasi-static control 755 (corresponding to quasi-static control 555). Because various real-world conditions relating to the topology may cause fluctuations in interference (and further relating to a frequency of performing interference scans), the signal strength threshold management using interference may be referred to as quasi-static control.

Control module 208 may perform interference scan 754 to measure interference as an interference-to-noise ratio (INR) for each link. For example, referring to FIG. 3, control module 208 may perform interference scan 754 by configuring receiver node 360 to remain in a receiving mode. Control module 208 may measure interference for active link 372 (e.g., the link between transmitter node 362 and receiver node 360) by having other node pairs transmit, and measuring the interference at receiver node 360. For instance, node 364 may transmit to node 366, causing interfering link 374 which may be measured at receiver node 360. Node 364 may further transmit to node 368 (which may also cause interfering link 374) and continue with the various node pairs. Thus, control module 208 may iterate through the various possible interfering links around receiver node 360 to measure the INR for each interfering link. In some examples, control module 208 may store the INR measurements as a vector of INR values (e.g., as part of interference data 254).

Using the INR values from interference scan 754, control module 208 may determine a metric 784 for fine-tuning filter value ranges for each link. Metric 784 may include a mapping function for INR values, such as a weighted combination of a maximum INR of the INR vector and an average INR of the INR vector. Control module 208 may compare this metric against an interference threshold to make an adjustment 785 to the filter value ranges. The interference threshold may correspond to a blocking effect that may be exhibited by the current node. If the metric is too high (e.g., greater than the threshold), the current interference may cause a huge blocking effect. Control module 208 may perform adjustment 785 to increase the upper value and/or lower value of the corresponding filter value range. If the metric is too low (e.g., less than the threshold), the current interference may not cause a significant blocking effect. Control module 208 may perform adjustment 785 to reduce the upper value and/or lower value of the corresponding filter value range. The increases and/or reductions may be the same or different for the upper or lower values. In addition, the increase and/or reduction value may be a predetermined value, such as 1 which may also be determined using analysis, and may be dynamically updated.

Although not illustrated in FIG. 7, in some examples control module 208 may further adjust filter value ranges for each type of packet. For example, filter value ranges for a control packet may be adjusted differently, such as more aggressively, than filter value ranges for a data packet.

Turning back to FIG. 5, in some examples control module 208 may further fine tune the filter value ranges (e.g., threshold 550) based on a performance 556 (which may correspond to performance data 256) of the node and a dynamic control 557. FIG. 8 illustrates a live control 800 including a live link performance 856 (corresponding to performance 556) and a dynamic control 857 (corresponding to dynamic control 557). Because a live link performance may be continuously monitored for updating filter value ranges, the signal strength threshold management using link performance may be referred to as dynamic control.

Performance 856 may correspond to a live link performance of receiving packets (on the currently examined link) using the current signal strength threshold. Control module 208 may perform, at categorize 886, a categorization of the received packets with respect to the current signal strength threshold. For instance, control module 208 may categorize received packets into two error cases as appropriate: a false positive case (e.g., when failing to filter out an undesired packet, in other words when an undesired packet falsely satisfies the signal strength threshold), and a false negative case (e.g., when failing to receive desired packets, in other words when a desired packet falsely fails to satisfy the signal strength threshold).

In order to filter out (e.g., drop) as many undesired packets as possible as well as receive (e.g., not drop) as many desired packets as possible, control module 208 may perform an adjustment 287 to the signal strength threshold based on a count of each type of error cases. If the false negative count is too high (e.g., is greater than a false negative threshold) control module 208 may reduce the signal strength threshold so as not to drop as many packets. If the false positive count is too high (e.g., is greater than a false positive threshold), control module 208 may increase the signal strength threshold to filter out more packets. The false negative and/or false positive thresholds may be based on predetermined values (e.g., based on analysis) and may be dynamically updated based on performance.

Because receiving desired packets may be more favorable than filtering out undesired packets, a rate of reducing the signal strength threshold may be faster than a rate of increasing the signal strength threshold. For example, when the false negative count is too high, the upper and/or lower value thresholds of the filter value range may be reduced by a fraction, such as 1/2, to quickly reduce the signal strength threshold. When the false positive count is too high, the upper and/or lower value thresholds of the filter value range may be increased by a predetermined value, such as 1, to gradually increase the signal strength threshold. The increase and/or reduction rates may be dynamically updated based on performance.

In addition, although not illustrated in FIG. 8, in some examples, each type of packet may have different false positive and/or false negative thresholds as well as different increase and/or reduction rates.

Turning back to FIG. 5, in some examples control module 208 may utilize the various control schemes described herein in combination to fine-tune the signal strength thresholds. As changes are detected, control module 208 may update threshold 550 accordingly. For example, control module 208 may continuously monitor performance 556 (using current threshold 550) and perform dynamic control 557 as needed to update threshold 550, such as after a certain number of packets are received.

Control module 208 may periodically perform interference scan 554, for instance every few hours. When new interference scan data is available, control module 208 may perform quasi-static control 555 to update threshold 550 accordingly. When topology 552 is changed (e.g., one or more links become unavailable), control module 208 may perform static control 553 to update threshold data 250 accordingly. In some examples, the change in topology 552 may render previous interference scan data outdated such that control module 208 may further perform interference scan 554 and quasi-static control 555 to further fine-tune threshold 550 as needed.

Returning now to FIG. 1, at step 108 one or more of the systems described herein may compare a signal strength of the received packet with the signal strength threshold. For example, filtering module 206 may compare a signal strength of packet 222 with the signal strength threshold.

The systems described herein may perform step 108 in a variety of ways. In one example, at decision 478 in FIG. 4, filtering module 206 may compare the signal strength of packet 422 to the signal strength threshold (e.g., upper and lower signal strength thresholds) determined at 450. If the signal strength fails to satisfy the signal strength threshold, packet 422 may be dropped and no longer processed. If the signal strength satisfies the signal strength threshold, packet 422 may be further processed.

As illustrated in FIG. 1, at step 110 one or more of the systems described herein may process, by the receiver node, the received packet when the signal strength satisfies the signal strength threshold. For example, processing module 210 may process packet 222 when the signal strength of packet 222 satisfies the signal strength threshold (e.g., the signal strength is within the filter value range).

The systems described herein may perform step 110 in a variety of ways. In one example, as illustrated in FIG. 4, processing packet 422 may include processing through the bottom branch, including decoding packet 422 at decoder 476. In some examples, processing packet 422 may include placing packet 422 in a queue for processing packets, such as a queue for decoder 476. Processing packet 422 may also include reading the destination of packet 422. As described herein, waiting to read the destination of packet 422 to determine whether to drop packet 422 may create a blocking effect that the systems and methods described herein may advantageously avoid or mitigate by using signal strength thresholds.

As described above, the systems and methods provided herein may employ adaptive packet filtering techniques on a receiver node based on the type of packets, strength of interference, and levels of information available. The receiver node may use a specific packet filtering procedure to determine whether a received packet is a desired or undesired packet. The packet filtering procedure may use different thresholds for each type of packet. The receiver node may leverage different levels of information to change the threshold range adaptively (e.g., static control based on topology, quasi-static control based on an interference management scan, and dynamic control based on actual link performance). The receiver node may utilize a full control loop to update the actual threshold efficiently, dynamically, and intelligently.

### Example Embodiments

Example 1: A computer-implemented method for adaptive wireless packet filtering control may include (i) receiving, by a receiver node of a wireless network, a packet sent by a transmitter node of the wireless network, resulting in a received packet, (ii) identifying a packet type of the received packet, (iii) determining, based on at least the identified packet type, a signal strength threshold, (iv) comparing a signal strength of the received packet with the signal strength threshold, and (v) processing, by the receiver node, the received packet when the signal strength satisfies the signal strength threshold.

Example 2: The method of Example 1, wherein the signal strength threshold comprises a filter value range including an upper threshold and a lower threshold.

Example 3: The method of Example 1 or 2, wherein the signal strength threshold is determined based on a distance between the receiver node and the transmitter node.

Example 4: The method of Example 3, wherein the distance is determined by mapping a topology of the wireless network using statistical analysis.

Example 5: The method of any of Examples 1-4, wherein the signal strength threshold is based on an interference management scan of the wireless network that measures an interference between each link for every pair of transmitter and receiver nodes in the wireless network.

Example 6: The method of Example 5, further comprising adjusting the signal strength threshold for each link based on the interference management scan.

Example 7: The method of Example 6, further comprising increasing the signal strength threshold for a link when an interference measurement for the link is greater than an interference threshold.

Example 8: The method of Example 6 or 7, further comprising decreasing the signal strength threshold for a link when an interference measurement for the link is less than an interference threshold.

Example 9: The method of any of Examples 1-8, further comprising adjusting the signal strength threshold based on a live link performance for a link between the transmitter node and the receiver node.

Example 10: The method of Example 9, further comprising decreasing the signal strength threshold when a false negative count of the link is greater than a false negative threshold.

Example 11: The method of Example 9 or 10, further comprising increasing the signal strength threshold when a false positive count of the link is greater than a false positive threshold.

Example 12: The method of any of Examples 1-11, wherein processing the received packet includes placing the received packet in a queue for processing packets.

Example 13: The method of any of Examples 1-12, wherein processing the received packet includes reading a destination of the packet.

Example 14: The method of any of Examples 1-13, further comprising dropping the received packet when the signal strength does not satisfy the signal strength threshold.

Example 15: The method of any of Examples 1-14, wherein the packet type includes a control packet or a data packet.

Example 16: A system comprising: an antenna for communicating with a wireless network, at least one physical processor, and physical memory comprising computer-executable instructions that, when executed by the physical processor, cause the physical processor to: (i) receive, via the antenna, a packet sent by a transmitter node of the wireless network, resulting in a received packet, (ii) identify a packet type of the received packet, (iii) determine, based on at least the identified packet type, a signal strength threshold, (iv) compare a signal strength of the received packet with the signal strength threshold, and (v) process the received packet when the signal strength satisfies the signal strength threshold.

Example 17: The system of Example 16, wherein the signal strength threshold is determined based on a distance between to the transmitter node, and the distance is determined by mapping a topology of the wireless network using statistical analysis.

Example 18: The system of Example 16 or 17, further comprising adjusting the signal strength threshold for each link based on an interference management scan of the wireless network that measures an interference between each link for every pair of transmitter and receiver nodes in the wireless network by: increasing the signal strength threshold for a link when an interference measurement for the link is greater than an interference threshold, and decreasing the signal strength threshold for a link when an interference measurement for the link is less than the interference threshold.

Example 19: The system of Example 16, 17, or 18, further comprising adjusting the signal strength threshold based on a live link performance for a link with the transmitter node by: decreasing the signal strength threshold when a false negative count of the link is greater than a false negative threshold, and increasing the signal strength threshold when a false positive count of the link is greater than a false positive threshold.

Example 20: A non-transitory computer-readable medium comprising one or more computer-executable instructions that, when executed by at least one processor of a computing device, cause the computing device to: (i) receive, via an antenna, a packet sent by a transmitter node of a wireless network, resulting in a received packet, (ii) identify a packet type of the received packet, (iii) determine, based on at least the identified packet type, a signal strength threshold, (iv) compare a signal strength of the received packet with the signal strength threshold, and (v) process the received packet when the signal strength satisfies the signal strength threshold.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive packet data to be transformed, transform the data, output a result of the transformation to compare a packet signal strength, use the result of the transformation to determine whether to drop packets, and store the result of the transformation to filter packets. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method comprising:
receiving, by a receiver node of a wireless network, a packet sent by a transmitter node of the wireless network, resulting in a received packet;
identifying a packet type of the received packet;
determining, based on at least the identified packet type, a signal strength threshold;
comparing a signal strength of the received packet with the signal strength threshold; and
processing, by the receiver node, the received packet when the signal strength satisfies the signal strength threshold.

2. The method of claim 1, wherein the signal strength threshold comprises a filter value range including an upper threshold and a lower threshold.

3. The method of claim 1 or claim 2, wherein the signal strength threshold is determined based on a distance between the receiver node and the transmitter node.

4. The method of claim 3, wherein the distance is determined by mapping a topology of the wireless network using statistical analysis.

5. The method of any preceding claim, wherein the signal strength threshold is based on an interference management scan of the wireless network that measures an interference between each link for every pair of transmitter and receiver nodes in the wireless network.

6. The method of claim 5, further comprising adjusting the signal strength threshold for each link based on the interference management scan.

7. The method of claim 5 or claim 6, further comprising increasing the signal strength threshold for a link when an interference measurement for the link is greater than an interference threshold.

8. The method of any of claims 5 to 7, further comprising decreasing the signal strength threshold for a link when an interference measurement for the link is less than an interference threshold.

9. The method of any preceding claim, further comprising adjusting the signal strength threshold based on a live link performance for a link between the transmitter node and the receiver node.

10. The method of any of claims 5 to 9, further comprising decreasing the signal strength threshold when a false negative count of the link is greater than a false negative threshold; optionally further comprising increasing the signal strength threshold when a false positive count of the link is greater than a false positive threshold.

11. The method of any preceding claim, wherein processing the received packet includes placing the received packet in a queue for processing packets; optionally wherein processing the received packet includes reading a destination of the packet.

12. The method of any preceding claim, further comprising dropping the received packet when the signal strength does not satisfy the signal strength threshold; optionally wherein the packet type includes a control packet or a data packet.

13. A system comprising:
an antenna for communicating with a wireless network;
at least one physical processor; and
a physical memory comprising computer-executable instructions that, when executed by the physical processor, cause the physical processor to:
receive, via the antenna, a packet sent by a transmitter node of the wireless network, resulting in a received packet;
identify a packet type of the received packet;
determine, based on at least the identified packet type, a signal strength threshold;
compare a signal strength of the received packet with the signal strength threshold; and
process the received packet when the signal strength satisfies the signal strength threshold.

14. The system of claim 13, further comprising adjusting the signal strength threshold for each link based on an interference management scan of the wireless network that measures an interference between each link for every pair of transmitter and receiver nodes in the wireless network by:
increasing the signal strength threshold for a link when an interference measurement for the link is greater than an interference threshold; and
decreasing the signal strength threshold for a link when an interference measurement for the link is less than the interference threshold; and/or further comprising adjusting the signal strength threshold based on a live link performance for a link with the transmitter node by:
decreasing the signal strength threshold when a false negative count of the link is greater than a false negative threshold; and
increasing the signal strength threshold when a false positive count of the link is greater than a false positive threshold.

15. A program which, when executed by at least one processor of a computing device, causes the computing device to function as the system of claim 13 or claim 14, or causes the computing device to carry out the method of any of claims 1 to 12
